(19)

Europäisches
Patentamt
European
Patent Office
Office européen
des brevets

(11)     **EP 3 419 157 A1**

(12)                    **EUROPEAN PATENT APPLICATION**

(43) Date of publication:
**26.12.2018  Bulletin 2018/52**

(51) Int Cl.:
**H02M 3/337** *(2006.01)*       **H02M 3/335** *(2006.01)*
**H02M 7/48** *(2007.01)*        *H02M 1/12* *(2006.01)*
*H02M 1/14* *(2006.01)*

(21) Application number: **17177363.3**

(22) Date of filing: **22.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **NPC Tech ApS
2730 Herlev (DK)**

(72) Inventors:
• **ANDERSEN, Thomas
2500 Valby (DK)**
• **MØNSTER, Jakob Døllner
2200 Copenhagen N (DK)**
• **RØDGAARD, Martin Schøler
2800 Kgs. Lyngby (DK)**
• **MADSEN, Mickey P
2730 Herlev (DK)**

(74) Representative: **Guardian
IP Consulting I/S
Diplomvej, Building 381
2800 Kgs. Lyngby (DK)**

(54)  **POWER CONVERTER ASSEMBLY COMPRISING PARASITIC INDUCTANCE BALANCING
BETWEEN MULTIPLE INVERTER STAGES**

(57)     The present invention relates to a power converter assembly comprising:
a first inverter stage and a second inverter stage mounted onto a carrier substrate and configured for supplying resonant voltage and current to a shared resonant network of the assembly. The first inverter stage is connected to the shared resonant network via a first conductive path or loop extending from an output node of the first inverter stage to a return node of the first inverter stage and the second inverter stage is connected to the shared resonant network via a second conductive path or loop extending from an output node of the second inverter stage to a return node of the second inverter stage. The first conductive path or loop exhibits a first total inductance and the second conductive path or loop exhibits a second total inductance substantially equal to the first total inductance.

FIG. 2

EP 3 419 157 A1

**Description**

The present invention relates to a power converter assembly comprising:

a first inverter stage and a second inverter stage mounted onto a carrier substrate and configured for supplying resonant voltage and current to a shared resonant network of the assembly. The first inverter stage is connected to the shared resonant network via a first conductive path or loop extending from an output node of the first inverter stage to a return node of the first inverter stage and the second inverter stage is connected to the shared resonant network via a second conductive path or loop extending from an output node of the second inverter stage to a return node of the second inverter stage. The first conductive path or loop exhibits a first total inductance and the second conductive path or loop exhibits a second total inductance substantially equal to the first total inductance.

BACKGROUND OF THE INVENTION

Power density and conversion efficiency are normally key performance metrics of power converter assemblies where it is desirable to achieve small physical size and high efficiency for a given output power specification. Resonant power converter topologies are well-known types of DC-DC/switched mode power supplies or converters (SMPS) in the art. Resonant power converters are particularly useful for high switching frequencies such as above 1 MHz where switching losses of standard SMPS topologies (Buck, Boost etc.) tend to be unacceptable for conversion efficiency reasons. High switching frequencies are generally desirable because of the resulting decrease of the electrical and physical size of circuit components of the power converter like inductors and capacitors. The smaller components allow increase of the power density of the SMPS. In a resonant power converter an input "chopper" semiconductor switch (often MOSFET or IGBT) of the standard SMPS is replaced with a "resonant" semiconductor switch. The resonant semiconductor switch relies on the resonances of circuit capacitances and inductances to shape the waveform of either the current or the voltage across the switching element such that, when switching takes place, there is no current through or voltage across the switching element. Hence switching loss is largely eliminated in at least some of the intrinsic capacitances of the input switching element such that a dramatic increase of the switching frequency becomes feasible for example to values at and above 5 MHz or 10 MHz. This feature is known in the art under designations like zero voltage and/or current switching (ZVS and/or ZCS) operation. Commonly used switched mode power converters operating under ZVS and/or ZCS are often designated class E, class F or class DE inverters or power converters.

It is often advantageous to construct a power converter assembly for a given output power rating by connecting multiple individual inverter stages in series, or parallel, between DC supply rails of the assembly. This feature markedly reduces voltage and/or current handling requirements of passive and active components, in particular of semiconductor switches, of the individual inverter stages. The inventors have however recognized a number of challenges with design and layout of carrier boards of power converter assemblies which comprise such multiple individual inverter stages connected to a shared resonant network. Imbalances between inductances of the conductive paths or loops coupling the respective outputs and return nodes of the multiple individual inverter stages to the shared resonant network lead to several noticeable problems such as lack of stability under steady-state operation and uneven voltage sharing of a DC input voltage between inverter stages. These problems are particularly pronounced where the multiple inverter stages are operated at very high switching frequencies such as frequencies above 5 MHz, or above 10 MHz or at even higher frequencies in the VHF frequency range above 30 MHz.

Consequently, there is a need in the art for a power converter assembly with improved matching between total inductances of the conductive paths or loops coupling the respective outputs and return nodes of the multiple individual inverter stages to the shared resonant network. In particular, inductance compensation components and mechanisms that avoid increasing the size and/or manufacturing costs of the assembly.

SUMMARY OF THE INVENTION

A first aspect of the invention relates to a power converter assembly comprising:

a first inverter stage and a second inverter stage mounted onto a carrier substrate and configured for supplying resonant voltage and current to a shared resonant network of the assembly, wherein the first inverter stage is connected to the shared resonant network via a first conductive path or loop on the carrier substrate extending from an output node of the first inverter stage to a return node of the first inverter stage; and wherein the second inverter stage is connected to the shared resonant network via a second conductive path or loop on the carrier substrate extending from an output node of the second inverter stage to a return node of the second inverter stage; wherein the first conductive path or loop exhibits a first total inductance and the second conductive path or loop exhibits a second total inductance substantially equal to the first total inductance - for example by a shape and dimensions of the second conductive path or loop.

Other embodiments of the present power converter assembly are set out in the dependent claims appended below.

BRIEF DESCRIPTION OF THE DRAWINGS

Preferred embodiments of the invention will be described in more detail in connection with the appended drawings, in which:

> FIG. 1 is a block diagram of a power converter assembly comprising multiple stacked inverter stages for explaining the background of the invention,
> FIG. 2 is a block diagram of a power converter assembly comprising multiple stacked inverter stages mounted onto a carrier substrate in accordance with a first embodiment of the invention;
> FIG. 3 is a transistor level diagram of an exemplary inverter stage of the assembly comprising a self-oscillating resonant class DE inverter; and
> FIG. 4 is a schematic illustration of the power converter assembly depicted on Fig. 2 mounted on to carrier substrate or carrier board

DETAILED DESCRIPTION OF PREFERRED EMBODIMENTS

In the following, various exemplary embodiments of the present power converter assembly are described with reference to the appended drawings. The skilled person will understand that the accompanying drawings are schematic and simplified for clarity and therefore merely show details which are essential to the understanding of the invention, while other details have been left out. Like reference numerals refer to like elements or components throughout. Like elements or components will therefore not necessarily be described in detail with respect to each figure. It will further be appreciated that certain actions and/or steps may be described or depicted in a particular order of occurrence while those skilled in the art will understand that such specificity with respect to sequence is not actually required.

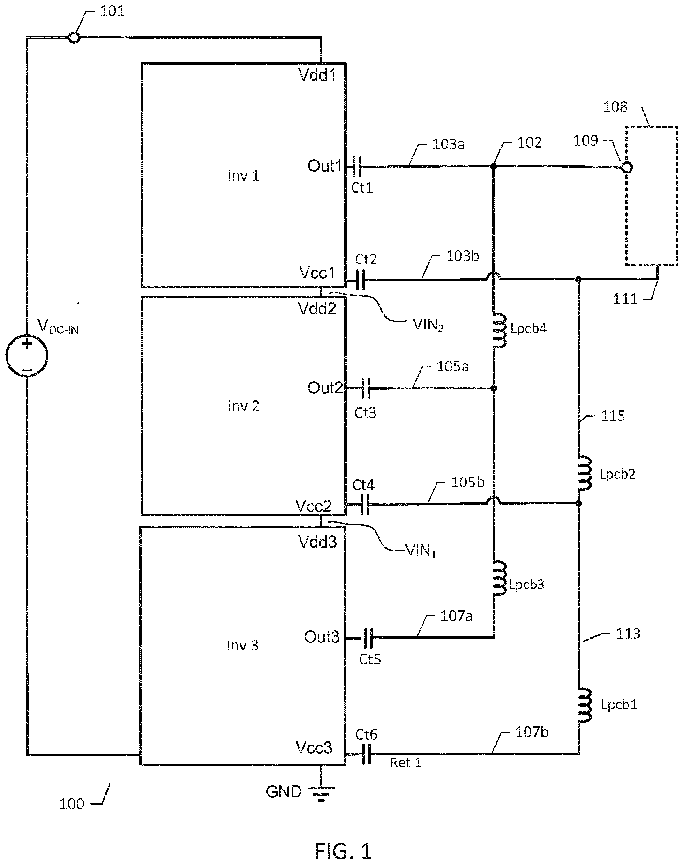

FIG. 1 is a block diagram of a power converter assembly 100 comprising multiple stacked inverter stages mounted onto a carrier substrate (not shown) for explaining the background of the invention and various problems addressed and solved by the invention. The carrier substrate may comprise a single-layer, dual-layer to multi-layer printed circuit board (PCB) on which the inverter stages and other components of the assembly 100 are mounted or soldered. The power converter assembly 100 comprises three inverter stages Inv1, Inv2 and Inv3 connected in series between a positive DC supply voltage $V_{DC-IN}$ and a negative DC supply voltage GND or ground. The respective output nodes, Out1-3, of the inverter stages are connected to a shared resonant network 108 of the assembly 100 to jointly produce ac voltage and current to a shared resonant network and thereby develop resonant voltage and current in the shared resonant network 108. The first output node Out1, of the first inverter stage Inv1 is connected to the shared resonant network 108 via a first conductive path or loop 213 on the carrier substrate extending from the output node Out to a return node, Vcc1, of the first inverter stage. The first conductive path 213 comprises series coupled isolation capacitors Ct1 and Ct2 which serve to provide DC insulation between the first inverter stage Inv1 and the second and third inverter stages Inv2-3. This is needed due to the stacked connection of the of the inverter stages to the DC input voltage which leaves the output nodes, Out1, Out2 and Out3, at different DC voltages. The first conductive path or loop 213 comprise a first or forward path segment 103a connected between the output node of the first inverter stage Inv1 and the input node 109 of the shared resonant network 108 and a second or return path segment 103b connected between a return node 111 of the shared resonant network 108 and the return node Vcc1 of the first inverter stage Inv1. The second output node Out2 of the second inverter stage Inv2 is likewise connected to the shared resonant network 108 via a second conductive path or loop on the carrier substrate extending from output node Out2 to a return node, Vcc2, of the second inverter stage. The second conductive path likewise comprises series coupled isolation capacitors Ct3 and Ct4 for DC insulation. The third inverter stage Inv3 is connected to the shared resonant network 108 in a similar manner through a third conductive path or loop 107a, 107b.

For practical reasons including minimizing board area occupation by the power converter assembly on the carrier substrate, the inverter stages are arranged at different physical distances from the shared resonant network 108. This is schematically indicated on the drawing where the first inverter is closest to the network 108 and the second and third inverter stages Inv2, Inv 3 are arranged at increasing distances from network 108 on the carrier substrate or board. Hence, the forward and return path segments 103a, 103b are shorter than the corresponding forward and return path segments 105a, 105b; 107a, 107b of the second and third conductive paths leading to a larger parasitic inductance of the second conductive path than the first conductive path 213 and even larger parasitic inductance of the third conductive path than the second conductive path. This is schematically illustrated on FIG.1 where the parasitic inductances associated with the forward and return path segments 103a, 103b of the first conductive path to the combination node 102 for simplification is assumed to be negligible or zero. The parasitic inductances Lpcb4 and Lpcb2 represent board wiring or traces of the forward and return path segments 105a, 105b of the second conductive path leading to the combination node 102. Likewise, the parasitic inductances Lpcb3 and Lpcb1 represent board wiring or traces of the forward and return path segments 107a, 107b of the third conductive path leading to the combination node 102. This difference or imbalance between the parasitic inductances of the first, second and third conductive paths leads to several noticeable problems in the operation of the power converter assembly 100. These problems are particularly pronounced where the inverter stages Inv1-3 are operated at very high switching frequencies such as frequencies above 5 MHz, or above 10 MHz or at even higher frequencies in the VHF frequency range above 30 MHz. At these high switching frequencies, the inductance (not shown) of the shared resonant network 108 is no longer dominating, e.g. at least three times or ten times larger, compared to the parasitic inductance of each of the first, second and third conductive paths and this can lead to stability problems and steady-state operation problems of the power converter assembly. The imbalance between the parasitic inductances of the first, second and third conductive paths can also lead to an uneven voltage sharing of the input voltage $V_{DC-IN}$ of the assembly between the inverter stages Inv1, Inv2, Inv 3 which is undesirable because one of the inverter stages may be subjected to voltages exceeding the maximum allowable or safe operation voltage of certain active components therein, in particular one or several switching transistors of the stage. Hence, ideally the voltage $VIN_1$ between the positive supply voltage Vdd3 of Inv3 and the negative supply voltage of Inv2 Vcc2 should be one-third of the input voltage $V_{DC-IN}$ and the voltage $VIN_2$ should be two-third of the input voltage $V_{DC-IN}$ due to the arrangement of three series connected, or cascaded, inverter stages. Finally, the presence of relatively large parasitic inductances and inductance imbalance between will force the inverter stages Inv1, Inv2, Inv 3 to operate out of phase because the parasitic inductances are comparatively good resonance tank compared to the "real" resonance tank provided by the the shared resonant network 108, This effect tends to circulate power between the individual inverter stages instead of delivering the power to the resonant network 108 and thus leading to reduced overall power conversion efficiency of the assembly and other problems.

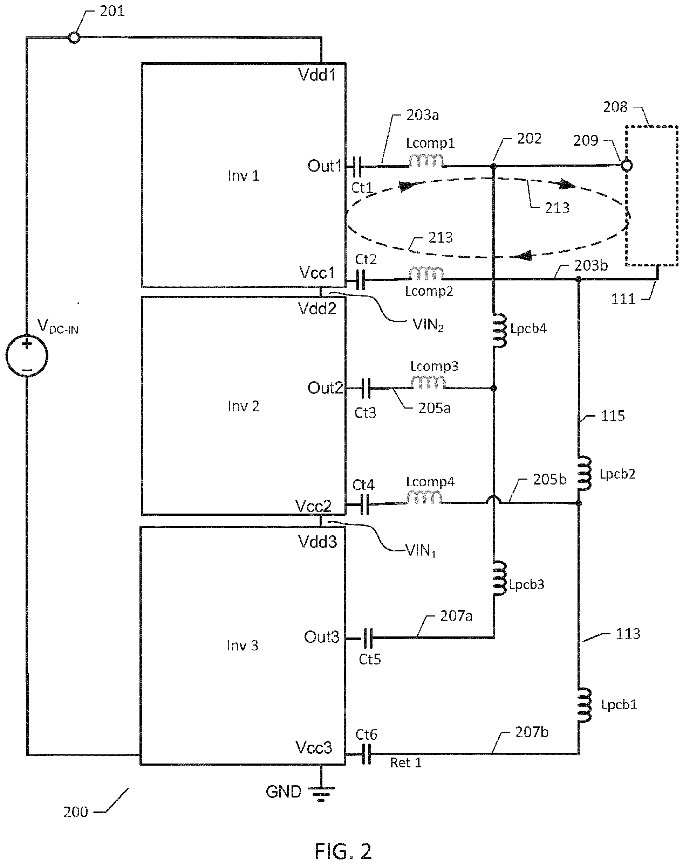

FIG.2 is a block diagram of a power converter assembly 200 comprising multiple stacked inverter stages Inv1-3 mounted onto a carrier substrate (not shown) in accordance with a first embodiment of the invention. The carrier substrate may comprise a single-layer, dual-layer to multi-layer printed circuit board (PCB) on which the inverter stages and other components of the assembly 200 are mounted or soldered. The power converter assembly 200 comprises two or more inverter stages where the respective inductances associated with two or more conductive paths or loops are matched, i.e. substantially equal, either by inserting discrete inductors in some of the conductive loops or through cleaver layout of the dimensions and shape of the conductive loops on, or in, the carrier substrate.

The power converter assembly 200 is energized by a DC supply voltage source $V_{DC-IN}$ via a supply terminal 201 of the assembly 200. The voltage level Vdd1 of the DC supply voltage source $V_{DC-IN}$ may vary considerably according to requirements of any particular conversion application and may for example lie between 1 V and 500 V for example between 10 V and 230 V. The power converter assembly 200 comprises three inverter stages Inv1, Inv2 and Inv3 connected in series between the positive DC supply voltage Vdd1 and a negative DC supply voltage, GND or ground. The skilled person will understand that alternative embodiments of the power converter assembly may include merely two individual inverter stages or more than three individual inverter stages and that these in the alternative may be connected in parallel to the positive DC supply voltage source $V_{DC-IN}$ instead of connected in series or stacked between the positive DC supply voltage Vdd1 and negative DC supply voltage GND as illustrated. The skilled person will understand that alternative embodiments of the power converter assembly may comprise a rectification circuit connected to an output (not shown) of the shared resonant network 208 to deliver a DC supply voltage at the output of the assembly 200.

The respective output nodes, Out1-3, of the inverter stages Inv1-3 are connected to the shared resonant network 208 of the assembly 200 to jointly produce ac voltage and current to the shared resonant network and thereby develop resonant voltage and current in the shared resonant network 208. The shared resonant network 208 may comprise one or more resonant inductor(s) and a resonant capacitor coupled in series between the input node 209 and return node of network. The one or more resonant inductor(s) may have a total inductance, e.g. as measured between the input node and return of the network, which is smaller than 5 µH such as less than 1 µH or even less than 500 nH.

The first output node Out1, of the first inverter stage Inv1 is connected to the shared resonant network 208 via a first conductive path or loop 213 on the carrier substrate extending from the output node Out to a return node, Vcc1, of the first inverter stage. The first conductive path 213 comprises series coupled isolation capacitors Ct1 and Ct2 which serve to provide DC insulation between the first inverter stage Inv1 and the second and third inverter stages Inv2-3. This is needed for the reasons discussed above. The first conductive path or loop comprise a forward path segment 203a connected between the output node of the first inverter stage Inv1 and the input node 209 of the shared resonant network 208 and a return path segment 203b connected between a return node 211 of the shared resonant network 108 and the return node Vcc1 of the first inverter stage Inv1. The second output node Out2 of the second inverter stage Inv2 is likewise connected to the shared resonant network 208 via a second conductive path or loop on the carrier substrate extending from output node Out2 to a return node, Vcc2, of the second inverter stage. The second conductive path likewise comprises series coupled isolation capacitors Ct3 and Ct4 for DC insulation purposes. The third inverter stage Inv3 is connected to the shared resonant network 208 in a similar manner through a third conductive path or loop comprising loop segments 207a, 207b. As discussed above in connection with the background of the invention, the inverter stages Inv1-3 are arranged at different physical distances from the shared resonant network 208 as schematically indicated on the drawing where the first inverter stage is closest to the network 208 and the second and third inverter stages Inv2, Inv 3 are arranged at increasing distances from the network 208 on the carrier substrate or board. This type of asymmetrical layout having different physical distances from the inverter stages to the shared resonant network is often the best layout solution for minimizing board area occupation of the power converter assembly 200 on the carrier substrate. Hence, as discussed above, the parasitic inductances, as schematically represented by Lpcb1, Lpcb2, Lpcb3 and Lpcb4, of the second and third conductive paths are larger than the parasitic inductance of the first conductive path associated with the board wiring or traces of the first inverter stage Inv 1 coupling the inverter output Out1 to the shared resonant network 208. This is again schematically illustrated on FIG.2 where the parasitic inductances associated with the first conductive path, comprising forward path segment 203a and return path segment 203b, for simplicity are assumed to be negligible or zero.

The forward path segment 203a and return path segment 203b of the first conductive path comprises a series connected first compensation inductance Lcomp1 and a second series connected compensation inductance Lcomp2, respectively. The first and second compensation inductances Lcomp1 and Lcomp2 exhibit a combined inductance which is substantially equal to the inductance difference between the first inductance of the first conductive loop, associated with the coupling of the first inverter stage Inv1 to the resonant network 208, and the second inductance of the second conductive loop, associated with the coupling of the third inverter stage Inv3 to the resonant network 208. Consequently, the addition of the first and second compensation inductances Lcomp1 and Lcomp2 compensates for the inductance mismatching between the first and third conductive loops or at least significantly reduces the inductance difference between the first and third conductive loops for example such that this inductance difference, or mismatch, is less than 20 %, more preferably less than 10 % such as less than 5 %. In some embodiments of the invention, the first compensation inductance Lcomp1 of the forward path segment 203a of the first conductive path may be specifically selected to match the inductance of the forward path segment 205a of the third conductive path and the return path segment 203b of the first conductive path may be specifically selected to match the inductance of the return path segment 205b. These embodiments may lead to a more optimal inductance matching between first and third inductances of the first and third conductive loops because the effects of inductance mismatching in the forward and return path segments of the loops can be of significance.

Following a similar reasoning, the forward path segment 205a and return path segment 205b of the second conductive path comprises a series connected first compensation inductor Lcomp3 and a second series connected compensation inductance Lcomp4, respectively. The first and second compensation inductances Lcomp3 and Lcomp4 exhibit a combined inductance which makes the total inductance of the second conductive loop, associated with the coupling of the second inverter stage Inv2 to the resonant network 208 substantially equal to the total inductance of the first conductive loop, including its compensations inductances, associated with the coupling of the first inverter stage Inv1 to the resonant network 208. Consequently, the addition of the first and second compensation inductances Lcomp3 and Lcomp4 compensates for the inductance mismatch between the second and first conductive loops or at least significantly reduces the inductance difference between the total inductances of the first and second conductive loops - for example such that this inductance difference, or mismatch, is less than 20 %, more preferably less than 10 % such as less than 5 %. In some embodiments of the invention, the first compensation inductance Lcomp3 of the forward path segment 203a of the first conductive path may be specifically selected to match the inductance of the forward path segment 205a of the second conductive path and the return path segment 203b of the first conductive path may be specifically selected to match the inductance of the return path segment 205b. These embodiments may lead to a more optimal inductance matching between total inductances of the first and second conductive loops because the effects of inductance mismatching in the forward and return path segments of these loops can be of significance.

The skilled person will appreciate that the desired matching between the total inductances of the first, second and third conductive loops using compensation inductances as discussed above means that effective inductances of the loops are matched. Hence, by the interconnection of the second and third conductive loops of the second and third inverters illustrated on FIG. 2, this requirement means that:

The first inverter stage Inv1 should be compensated by:

$$Lcomp1 + Lcomp2 = Lpcb3 + Lpcb1 + (2 * Lpcb4) + (2 * Lpcb2);$$

and

The second inverter stage Inv2 should be compensated by:

$$Lcomp3 + Lcomp4 = Lpcb4 + Lpcb2;$$

This selection is caused by the flow of the ac output currents from both the second and third inverter stages through the parasitic trace inductances Lpcb4 and Lpcb2 in the illustrated coupling scheme such that each of these inductances effectively appears to be two times the value of their physical inductance. This is under the reasonable assumption that the second inverter stage and third inverter stage are delivering substantially identical ac output current to the resonant network load 208.

The skilled person will understand that the circuit topologies and content of active and passive components of the first, second and third inverter stages Inv1-3 preferably are nominally identical to facilitate equal voltage and power distribution between the inverter stages for the reasons discussed above. Each of the first, second and third inverter stages Inv1-3 may comprise a class E inverter, class DE inverter, class F inverter etc. such that each inverter stage in conjunction with the shared resonant network forms a power converter configured to deliver either a DC output voltage or an ac output voltage. Some embodiments of the inverter stages Inv1-3 may include respective self-oscillating resonant class DE inverters.

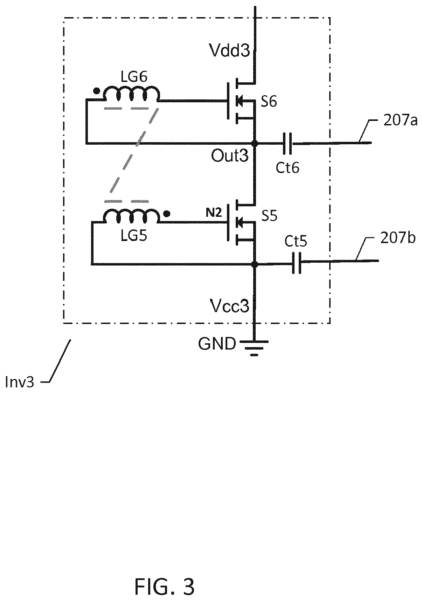

FIG. 3 is a transistor level diagram of an exemplary inverter stage Inv3 of the assembly 200 comprising a self-oscillating resonant class DE inverter. The self-oscillating resonant class DE inverter comprises a pair of magnetically coupled inductors arranged in series with respective ones of a low-side NMOS transistor S5 and a high-side NMOS transistor S6. These transistors are connected in cascade or series between the first and second local DC supply rails Vcc3, Vdd3 and have a common output node Out3 arranged in-between the drain and source terminals of the NMOS transistor S5 and S6. The skilled person will appreciate that alternative embodiments of the inverter stages may use other types of semiconductor switches for example PMOS transistors, Gallium Nitride (GaN) MOSFETs or Silicon Carbide (SiC) MOSFETs or IGBTs. The control terminal, e.g. a gate or base, of each of the one, two or more semiconductor switches may be coupled to, and driven by, respective switch control signals to alternatingly force the semiconductor switch in question between on-states and off-states.

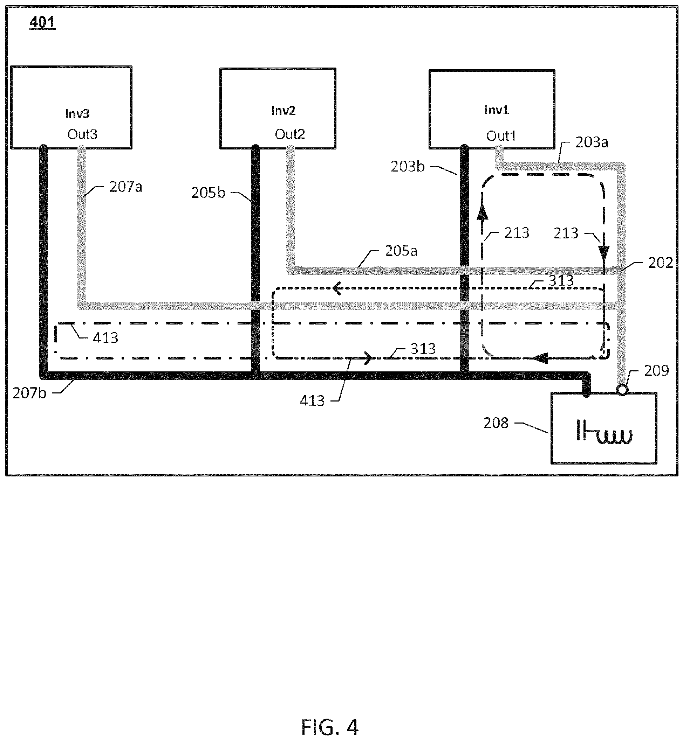

FIG. 4 is a schematic illustration of the power converter assembly mounted on to carrier substrate 401 or carrier board such as a multi-layer printed circuit board (PCB) on which the inverter stages Inv1-3 and other components are mounted or soldered. The schematic illustration of the carrier substrate 401 illustrates dimensions and shape of the first conductive path 213, second conductive path 313 and third conductive path 413 of the first, second and third inverter stages Inv1-3, respectively, associated with the respective PCB wire or trace segments interconnecting the respective inverter outputs Out1-3 with the shared resonant network 208. The output Out3 of inverter stage Inv3 has the largest physical distance to the shared resonant network 208 and hence has the greatest length of board wiring including forward path segment 207a and return path segment 207b. The output Out2 of the inverter stage Inv2 has the second largest physical distance to the shared resonant network 208 and hence a smaller length of board wiring, including forward path segment 205a and return path segment 205b, than inverter stage Inv3.

The skilled person will understand that the above-discussed first, second, third and fourth compensation inductances Lcomp1, Lcomp2, Lcomp3, Lcomp4, which are added to the second and third conductive paths 313, 413 increase their respective inductances and thereby balancing the total inductances of the first conductive path 213, second conductive path 313 and third conductive path 413, may be implemented by separate/discrete inductor components or by appropriate selection of the geometry of the first, second and third conductive paths 213, 313, 413 or any combination of these implementations. With respect to the implementation of the first, second, third and fourth compensation inductances Lcomp1, Lcomp2, Lcomp3, Lcomp4 as separate/discrete inductor components, each of these may comprise a SMD inductor of appropriate inductance mounted on the surface of the carrier board 401 or may be embedded in, or on, one or more layer(s) of the carrier substrate 401 by structured electrical traces e.g. forming a solenoid structure or spiral structure.

In contrast the embodiment of the invention utilizes tailored dimension and shape of the board wiring or traces of the first, second and third conductive loops of the first, second and third inverter stages Inv1-3, respectively, to provide inductance matching or balance between inductances of the first, second and third conductive loops. This is achieved by designing the first conductive loop 213, second conductive loop 313 and third conductive loop 413 (and any further conductive loops as the case may be) to possess substantially identical loop areas, since the inductance of such loops are largely identical to a first order approximation. As illustrated on the drawing, the third conductive loop 413 is formed or shaped as an elongate rectangle with a high aspect ratio while the first conductive loop 213 is approximately of quadratic shape while rectangular shape of the second conductive loop 313 lies somewhere in-between these extremes.

**Claims**

1. A power converter assembly comprising:

   a first inverter stage and a second inverter stage mounted onto a carrier substrate and configured for supplying resonant voltage and current to a shared resonant network of the assembly,
   wherein the first inverter stage is connected to the shared resonant network via a first conductive path or loop on the carrier substrate extending from an output node of the first inverter stage to a return node of the first inverter stage; and
   wherein the second inverter stage is connected to the shared resonant network via a second conductive path or loop on the carrier substrate extending from an output node of the second inverter stage to a return node of the second inverter stage;
   wherein the first conductive path or loop exhibits a first total inductance and the second conductive path or loop exhibits a second total inductance substantially equal to the first total inductance.

2. A power converter assembly according to claim 1, wherein the first and second conductive paths are arranged or designed to exhibit an inductance mismatch less than 20 %, more preferably less than 10 % such as less than 5 %.

3. A power converter assembly according to claim 1 or 2, wherein each of the first and second total inductances is at least 3 times, such as at least 10 times, smaller than an inductance of the shared resonant network.

4. A power converter assembly according to claim 3, wherein the inverter output nodes of the first and second inverter stages are arranged equidistantly from an input node of the shared resonant network, e.g. star or symmetric layout, to provide substantially equal shapes and size of the first and second conductive paths or loops - hence providing matching between the first and second inductances using exclusively parasitic inductances associated with the first and second conductive paths

5. A power converter assembly according to claim 4, wherein the inverter output nodes of the first and second inverter stages are arranged at increasing distances from the input node of the shared resonant network; and
   the first conductive path has a loop area substantially equal to a loop area of the second conductive path to match parasitic inductances associated with the first and second conductive paths.

6. A power converter assembly according to claim 5, wherein the shape and size of the first conductive path differs from the shape and size of the second conductive path.

7. A power converter assembly according to any of claim 1-3, wherein the inverter output nodes of the first and second inverter stages are arranged at increasing distance from an input node of the shared resonant network, e.g. asymmetrical layout; and
   the first conductive path at least comprises a first compensation inductor configured to increase the first inductance of the first conductive path such that it substantially equals the second inductance of the second conductive path.

8. A power converter assembly according to claim 7, wherein the first compensation inductor is embedded in, or on, one or more layer(s) of the carrier substrate by electrical traces e.g. forming a solenoid structure or spiral structure.

9. A power converter assembly according to claim 7, wherein the first compensation inductor comprises a discrete inductor component mounted onto a surface of the carrier substrate for example a SMD inductor.

10. A power converter assembly according any of the preceding claims, wherein the first conductive path comprises:

    - a first path segment connected between the output node of the first inverter stage and the input node of the shared resonant network and a second path segment connected between a return node of the shared resonant network and the return node of the first inverter stage;

    and the second conductive path comprises:

    - a first path segment connected between the output node of the second inverter stage and the input node of the shared resonant network and a second path segment connected between a return node of the shared resonant network and the return node of the second inverter stage.

11. A power converter assembly according to any of the preceding claims, wherein the first and second inverter stages are connected in series between a positive DC supply rail and a negative DC supply rail of the assembly.

12. A power converter assembly according to claim 11, wherein each of the first and second inverter stages comprises:

- a first isolation capacitor connected in series between the output node of the inverter stage and the input node of the shared resonant network,
- a second isolation capacitor connected in series between the return node of the inverter stage and the return node of the resonant network.

13. A power converter assembly according to any of claims 1-10, wherein the first and second inverter stages are connected in parallel between a positive DC supply rail and a negative DC supply rail of the assembly.

14. A power converter assembly according to any of the preceding claims, wherein an inductance of the shared resonant network, as measured between the input node and return of the network, is smaller than 5 $\mu$H such as less than 1 $\mu$H.

15. A resonant power converter assembly according to any of the preceding claims, further comprising:

a one or more additional inverter stage(s) mounted onto the carrier substrate and configured for supplying resonant voltage and current to the shared resonant network; wherein the one or more additional inverter stage(s) is connected to the shared resonant network via respective conductive path(s) or loop(s) on the carrier substrate; said respective conductive path(s) or loop(s) extending from respective output node(s) of the one or more additional inverter stage(s) to respective return node(s) of the one or more additional inverter stage(s); and each of said respective conductive path(s) or loop(s) is configured to exhibit a total inductance which is substantially equal to the first total inductance, preferably within a tolerance of less than +/- 20 %.

FIG. 1

FIG. 2

FIG. 3

FIG. 4

Europäisches
Patentamt

European
Patent Office

Office européen
des brevets

# EUROPEAN SEARCH REPORT

Application Number

EP 17 17 7363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/012535 A1 (RAYMOND LUKE C [US] ET AL) 12 January 2017 (2017-01-12)<br>* abstract *<br>* paragraphs [0023] - [0028], [0033], [0036] - [0038]; figures 1, 3, 10-13 *<br>----- | 1-15 | INV.<br>H02M3/337<br>H02M3/335<br>H02M7/48<br><br>ADD.<br>H02M1/12<br>H02M1/14 |
| X | WO 2016/202895 A1 (NPC TECH APS [DK]) 22 December 2016 (2016-12-22)<br>* abstract *<br>* figures 2, 2A, 2B, 5, 6 *<br>----- | 1-15 | |

TECHNICAL FIELDS
SEARCHED    (IPC)

H02M

The present search report has been drawn up for all claims

| Place of search | Date of completion of the search | Examiner |
|---|---|---|
| The Hague | 30 October 2017 | Van der Meer, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 17 7363

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2017

| Patent document cited in search report | Publication date | Patent family member(s) | Publication date |
|---|---|---|---|
| US 2017012535 A1 | 12-01-2017 | NONE | |
| WO 2016202895 A1 | 22-12-2016 | NONE | |

EPO FORM P0459

For more details about this annex : see Official Journal of the European Patent Office, No. 12/82